Europäisches Patentamt

(19) European Patent Office

Office européen des brevets

(11) Veröffentlichungsnummer: **0 035 756**
**B1**

(12) # EUROPÄISCHE PATENTSCHRIFT

(45) Veröffentlichungstag der Patentschrift:
27.07.83

(51) Int. Cl.³: **B 01 J 8/24,** F 28 D 13/00,
F 16 L 59/02

(21) Anmeldenummer: 81101578.3

(22) Anmeldetag: 05.03.81

(54) Verfahren und Vorrichtung zur Verminderung des Wärme- und Stoffaustausches in unmittelbarer Wandnähe von Wirbelschichtreaktoren.

(30) Priorität: 11.03.80 DE 3009198

(43) Veröffentlichungstag der Anmeldung:
16.09.81 Patentblatt 81/37

(45) Bekanntmachung des Hinweises auf die Patenterteilung:
27.07.83 Patentblatt 83/30

(84) Benannte Vertragsstaaten:
BE FR GB IT NL

(56) Entgegenhaltungen:
FR-A-1 231 082
FR-A-2 110 050
FR-A-2 261 497
US-A-2 623 810
US-A-2 835 483

(73) Patentinhaber: **Bergwerksverband GmbH,**
**Franz-Fischer-Weg 61, D-4300 Essen 13 (DE)**

(72) Erfinder: **Bonn, Bernhard, Dr. Dipl.-Chem.,**
**Soniusweg 12, D-4300 Essen 15 (DE)**
Erfinder: **Holl, Lothar, Am Lehmberg 1a,**
**D-4300 Essen 13 (DE)**
Erfinder: **Giertz, Franz, Dipl.-Ing., Fichtenhain 8,**
**D-4030 Ratingen 4 (DE)**
Erfinder: **Schreckenberg, Heinz, Dr. Dipl.-Ing,**
**Hohlweg 26, D-5970 Brilon (DE)**

(74) Vertreter: **Schumacher, Horst, Dr., Bergwerksverband**
**GmbH Patent- und Vertragsabteilung**
**Franz-Fischer-Weg 61, D-4300 Essen 13 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

### Verfahren und Vorrichtung zur Verminderung des Wärme- und Stoffaustausches in unmittelbarer Wandnähe von Wirbelschichtreaktoren

Die Erfindung betrifft ein Verfahren und eine Vorrichtung zur Verminderung des Wärme-, Stoff- und Impulsaustausches in unmittelbarer Wandnähe in Wirbelschichtreaktoren, in denen ein gekörnter Feststoff durch ein Fluid von unten angeströmt und dadurch in eine intensive, aufgewirbelte Bewegung versetzt wird (Wirbelschicht).

Die Verminderung des Wärme-, Stoff- und Impulsaustausches ist z. B. bei chemischen Reaktoren oder Brennkammern häufig wünschenswert, um die Wärmeverluste zu verringern oder auch die Wandungen eventuell gleichzeitig vor korrosiver und erosiver Beanspruchung zu schützen.

Infolge der intensiven Feststoffbewegung weisen Wirbelschichten z. B. ein außerordentlich gutes Wärmeübertragungsvermögen auf. Die wirbelschichtseitigen Wärmeübergangskoeffizienten sind beispielsweise etwa eine Größenordnung höher als bei Wärmetauschern, die nur von Gas beaufschlagt werden (M. Baerns, Chem. Ing. Techn., 40 [1968], 737). Diese häufig durchaus erwünschte Eigenschaft kann in manchen Anwendungsfällen oder in bestimmten Betriebsphasen zu ungewollt hohen Wärmeableitungen über die Reaktorwandungen führen. Auch der Stoffaustausch wird in Wirbelschichten durch die Aufwirbelung des Feststoffes stark begünstigt, so daß Vermischungen von Feststoffen in Wirbelschichtreaktoren leicht durchgeführt werden können und zu sehr homogenen Produkten führen.

Um unerwünscht hohe Wärmeableitungen über die Wandungen und/oder korrosiven und erosiven Angriff zu vermindern, sind keramische Auskleidungen, z. B. durch Ausstampfen oder Ausmauern, üblich (Lueger, Lexikon der Technik, 4. Auflage [1965], Bd. 7, Seite 266, Stuttgart). Die Eigenart der Ausmauerung bedingt es jedoch, daß die Anzahl der Wanddurchführungen wegen der erhöhten Störanfälligkeit der Auskleidung an diesen Stellen so gering wie möglich gehalten wird. Bei Wirbelschichtreaktoren mit hoher thermischer Belastung des Reaktionsraumes, wie z. B. Hochleistungsbrennkammern, muß jedoch durch einen in die Schicht eintauchenden Wärmetauscher gekühlt werden, um die Reaktionstemperatur regeln zu können. In diesem Fall ist eine Ausmauerung der Wände wegen der vielen Durchführungen unzweckmäßig; man wendet dabei vielmehr gekühlte Flossenrohrwände an, bei denen Durchführungen leicht herzustellen sind und die eine ausreichende Festigkeit haben. Die erhöhte Wärmeableitung über die gekühlten Wände muß bei dieser Konstruktion aber hingenommen werden (E. Wied, Dampferzeuger mit Wirbelschichtfeuerung unter atmosph. und Überdruckbedingungen, VGB-Kraftwerkstechnik, 58 [1978], 8, 554). Insbesondere beim Aufheizen des Wirbelschichtreaktors wirkt sich das dahingehend aus, daß unverhältnismäßig große Aufheizleistungen erforderlich werden, die i. a. durch Fremdenergie aufgebracht werden müssen.

Ein Ausstampfen des Reaktors mit einem wärmedämmenden Material bringt nur eine vergleichsweise geringe Wirkung, da durch die große Zahl der Befestigungsstifte die Wärmedurchgangszahl der Wand nur geringfügig verkleinert wird. Zudem ist die Haltbarkeit der Ausstampfung im Bereich der vielen Durchführungen, wie sie für Wärmetauscherbündel erforderlich sind, sehr begrenzt, und Schäden lassen sich nur mit großem Aufwand beseitigen. Das gilt auch, wenn eine Auskleidung nicht zur Wärmedämmung, sondern zum Schutz vor korrosivem und erosivem Angriff angebracht werden muß (W. Gumz, Kurzes Handbuch der Brennstoff- und Feuerungstechnik, 3. Auflage, Seiten 600–603, Berlin, Göttingen, Heidelberg, 1962; Koppers Handbuch der Brennstofftechnik, 3. Auflage, Seite 363, Essen).

Der Erfindung liegt daher die Aufgabe zugrunde, die vorgenannten Nachteile zu überwinden, ohne die günstigen Eigenschaften der Wirbelschicht wesentlich zu verändern. Insbesondere sollten der Wärmedurchgang durch die Reaktorwandungen sowie der Stoff- und Impulsaustausch in Wandnähe erheblich vermindert werden.

Es hat sich gezeigt, daß sich diese Aufgabe gemäß vorliegender Erfindung in überraschend einfacher und technisch fortschrittlicher Weise lösen läßt, wenn der Strömungswiderstand für das Fluid in Wandnähe so weit erhöht wird, daß die Wirbelschicht in diesem Bereich nicht mehr aufgewirbelt wird. Dieses kann verwirklicht werden, indem Einbauten in den Reaktionsapparat eingebracht werden, die von den Reaktorwandungen abstehen. Diese Einbauten sind erfindungsgemäß vorzugsweise rippenförmig mit einer bevorzugt horizontalen Erstreckung. Um das Wirbeln in Wandnähe besonders sicher zu unterbinden, ist erfindungsgemäß der Abstand der Rippen in Strömungsrichtung des Fluids höchstens etwa halb so groß wie die Rippenhöhe quer dazu. Die Rippen können sowohl senkrecht von der Wand abstehen als auch geneigt sein. Die Einbauten können aber erfindungsgemäß auch parallel zur Reaktorwand angeordnet sein und mit dieser einen Spalt bilden, dessen Weite u. a. von der gewünschten Dämmwirkung abhängt.

Die erfindungsgemäßen Einbauten können gemäß einer Weiterbildung der Erfindung segmentweise angebracht werden, was die thermischen Materialspannungen mindert und die Montage und mögliche Lagerhaltung solcher Rippen vereinfacht und ein Vorfertigen und auch nachträgliches Einbauen ermöglicht.

Erfindungsgemäße Einbauten können an der Reaktorinnenwand durch Schweißen, Schrauben, Kleben oder ähnliche Techniken befestigt werden. In jedem Fall bieten sie den Vorteil einer gewissen Aussteifung der Reaktorwandung und es können deshalb die Materialabmessungen und/oder sonstigen Aussteifungen, wie sie vor allem bei thermisch belasteten Reaktoren gebräuchlich sind, vermindert werden. Soweit es sich bei den Einbauten um solche handelt, die parallel zur Reaktorwand angeordnet sind und mit dieser einen Spalt bilden, kann es von Vorteil sein, diesen z. B. eine Schuppenstruktur zu geben, um sie gegen Wärmeverzug zu stabilisieren. Letzteres empfiehlt sich vor allem dann, wenn die fraglichen Einbauten etwa aus entsprechend der Reaktorform gebogenen Blechstreifen bestehen.

Es hat sich gezeigt, daß die Dämmwirkung der erfindungsgemäßen Einbauten um so größer ist, je breiter die Spalten sind oder je weiter die Rippen in den Reaktorraum hineinragen.

Durch Einbauten dieser Art wird der Strömungswiderstand für das Fluid in unmittelbarer Wandnähe so weitgehend erhöht, daß die Wirbelbewegung des Feststoffes, durch die der gute Wärme- und Stoffaustausch in Wirbelschichten bewirkt wird, in der Randzone zum Erliegen kommt. Dieses Ergebnis ist insofern überraschend, als nichtrandnahe Einbauten, z. B. Wärmetauscherrohre, von der Wirbelschicht flüssigkeitsähnlich umspült werden (Fluidization, J. F. Davidson, D. Harrison [eds.], London und New York [1971], z. B. Kapitel 11).

Von besonderem Vorteil ist bei dem beschriebenen Verfahren, daß für den Schutz der Wandung bzw. zur Wärmedämmung des Wirbelschichtreaktors das Wirbelgut selbst genutzt wird. Daher braucht kein aufwendiges Ausstampfen oder ähnliches zu erfolgen, sondern beim Auffüllen des Reaktors mit Schichtmaterial und dem anschließenden Fluidisieren bildet sich selbsttätig die Schutzschicht in der Ruhezone aus. Zudem fließt das Material aus der Ruhezone beim Ablassen der Reaktorfüllung, etwa beim Stillsetzen des Apparates, mit ab und gibt die Wände z. B. für Inspektionen frei.

Wenn der Strömungswiderstand in Wandnähe durch Einbauten erhöht wird, sind insbesondere die parallel zur Wand angebrachten Einbauten geeignet, das Schichtmaterial auch aus der Ruhezone vollständig mit abfließen zu lassen, während rippenförmige Einbauten besonders gute Zugänglichkeit der Wände nach dem Ablassen des Schichtmaterials gewähren und auch z. B. zwischen den Rohrreihen eines Wärmetauscherbündels ohne Schwierigkeiten durchlaufen können. Durch Neigen usw. der Rippen lassen sich hier besondere Effekte erreichen, z. B. vollständiges Ablaufen des Schichtmaterials beim Entleeren des Reaktors oder auch umgekehrt ein Zurückhalten von besonders viel Schichtmaterial an den Wänden auch nach dem Entleeren des Reaktors.

Ein weiterer Vorteil besteht darin, daß man auf die Temperaturwechselbeständigkeit von Ausmauerungen oder Ausstampfungen keine Rücksicht zu nehmen braucht, d. h. man kann den Reaktor, ungeachtet seiner Schutzeinbauten, beliebig schnell aufheizen oder abkühlen lassen.

Da die randnahe Ruhezone nicht an der Wirbelbewegung teilnimmt, erfolgt dort auch nur ein stark gehemmter Stoffaustausch mit der wirbelnden Kernzone des Reaktors. Das ist von Vorteil bei Reaktionen mit korrosionsfördernden Reaktionsteilnehmern, um die Wandungen des Reaktors zu schützen, aber auch bei Reaktionen mit starker Wärmetönung, da in der Ruhezone somit nicht nur die Wärmedurchgangszahl verringert ist, sondern auch keine oder nur noch eine stark verminderte Reaktion stattfindet. Weiterhin tritt eine eventuelle erosive Beanspruchung nur noch an den leicht erneuerbaren Einbauten auf, während die eigentliche Reaktorwand durch die Ruhezone geschützt wird.

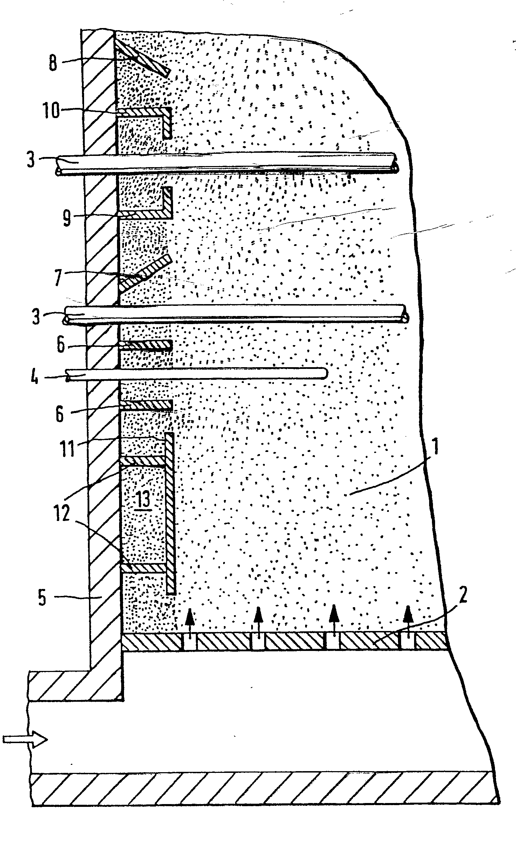

Anhand der Zeichnung wird eine Vorrichtung (vergrößerter Ausschnitt) zur Ausführung des erfindungsgemäßen Verfahrens lediglich beispielsweise näher erläutert. Hierbei zeigt die Figur die Anordnung und verschiedene Formen der die Wirbelbewegung unterbindenden Einbauten zur Erzielung einer Ruhezone in der Wandnähe des Reaktors.

Gemäß der Figur — vergrößerter Ausschnitt eines gewöhnlichen Wirbelschichtreaktors — ist letzterer mit Feststoff (Wirbelgut) 1 beschickt, der von unten mit dem durch den Anströmboden 2 eintretenden Fluid (Gas oder Flüssigkeit) aufgewirbelt wird. Die intensive Feststoffbewegung, die Ursache für den guten Stoff- und Wärmeaustausch innerhalb der Schicht und von der Schicht auf die Wände ist, wird beispielsweise durch Einbauten 6 bis 11 in unmittelbarer Wandnähe so weit herabgesetzt, daß keine Wirbelbewegung mehr auftritt und infolgedessen Stoff- und Wärmeaustausch stark vermindert werden. Wenn sich in der Schicht z. B. Wärmetauscherrohre 3 oder Meßwertgeber 4 oder ähnliches befinden, die durch die Reaktorwände geführt sind, so können die die Wirbelbewegung hemmenden Einbauten 6 bis 10 z. B. vorteilhaft rippenförmig ausgebildet sein. Dadurch können die Durchführungen in die Zwischenräume zwischen den Rippen verlegt werden, was zu einer besonders einfachen Konstruktion führt. Die von der Wirbelschichtreaktorwand 5 abstehenden Einbauten können entweder gerade 6 oder geneigt 7, 8 sein, nach oben 9 oder nach unten 10 abgewinkelt oder auch parallel 11 zur Reaktorwand 5 angeordnet sein. Im letzteren Fall können sie beispielsweise durch Abstandshalter 12 gehalten werden, die so ausgeführt werden können, daß sie zusätzlich die Feststoffbewegung behindern. Hierdurch entsteht ein Spalt 13 mit der Reaktorinnenwand.

## Beispiel 1

In einem Wirbelschichtreaktormodell (Länge 400 mm, Breite 500 mm, Höhe 800 mm) wurde die Wirksamkeit der Erfindung in der nachfolgenden Weise nachgewiesen:

Als Einbauten wurden Rippen (gemäß Figur — Bezugszeichen 6 bis 10) von ca. 80 mm Höhe und ca. 40 mm gegenseitigem Abstand gewählt, die im wesentlichen senkrecht von der Reaktorinnenwand abstanden. Zwischen den Einbauten waren Rohre durch die Wand geführt, wie in der Figur dargestellt; Wirbelgut war Sand. Die Einbauten waren nur an einer Seite des rechteckigen Modellreaktors angebracht, dessen Wände aus Plexiglas bestanden. Beim Aufwirbeln des Sandes zeigte sich deutlich, daß an den Wänden ohne Einbauten intensive Feststoffbewegung auch um die durch die Wand durchgeführten Rohre herum auftrat, im Bereich der erfindungsgemäßen Einbauten war der Sand jedoch vollständig in Ruhe.

Beispiel 2

In einer Wirbelschichtfeuerungsbrennkammer (Länge 400 mm, Breite 800 mm, Wirbelschichthöhe 1000 mm) mit einer zu Testzwecken gekühlten Seitenwand (800 mm) wurden in orientierenden Versuchen verschiedene Einbauten vor der gekühlten Fläche in einem Abstand von etwa 50 mm parallel zu ihr angebracht, welche die Aufwirbelung verhindern und damit die Wärmeableitung über die gekühlte Wand verringern sollten. Es zeigte sich, daß bei Aufheizversuchen mit kohlenstoffhaltigem Wirbelgut in dieser Brennkammer unter sonst völlig gleichen Bedingungen nur etwa die halbe Zeit zur Erreichung der Betriebstemperatur von ca. 850°C benötigt wurde, als beim Betrieb dieser Brennkammer ohne die Einbauten. Aus diesem Ergebnis läßt sich schließen, daß der Wärmeübergang auf die gekühlte Wand durch die Verhinderung des Aufwirbelns in Wandnähe um mehr als ca. 30% vermindert wird.

**Patentansprüche**

1. Verfahren zur Verminderung des Wärme-, Impuls- und Stoffaustausches in unmittelbarer Wandnähe von Wirbelschichtreaktoren, dadurch gekennzeichnet, daß der Strömungswiderstand für das durch die Wirbelschicht geleitete Fluid in Wandnähe so weit erhöht wird, daß die Wirbelschicht in diesem Bereich nicht mehr wirbelt.

2. Vorrichtung zum Durchführen des Verfahrens nach Anspruch 1, gekennzeichnet durch an den Reaktorinnenwandungen abstehende Einbauten (6, . . ., 12).

3. Vorrichtung nach Anspruch 2, dadurch gekennzeichnet, daß die Einbauten (6, . . ., 10) rippenförmig ausgebildet sind.

4. Vorrichtung nach Anspruch 3, dadurch gekennzeichnet, daß der Abstand der Rippen in Strömungsrichtung des Fluids höchstens halb so groß ist, wie ihre Höhe quer dazu.

5. Vorrichtung nach Anspruch 2, dadurch gekennzeichnet, daß die Einbauten (11) parallel zur Reaktorwand angeordnet sind und mit dieser einen Spalt (13) bilden.

6. Vorrichtung nach einem oder mehreren der Ansprüche 2 bis 5, dadurch gekennzeichnet, daß die Einbauten (6, . . ., 12) segmentweise angebracht sind.

**Claims**

1. A method of reducing the heat, impulse, and material exchange in the direct vicinity of the walls of fluidized bed reactors, characterized in that the flow resistance for the fluid passed through the fluidized bed is increased in the vicinity of the walls to such an extent that the fluidized bed no longer eddies in this region.

2. Apparatus for performing the method according to claim 1, characterized by mountings (6, . . ., 12) projecting from the inner walls of the reactor.

3. Apparatus according to claim 2, characterized in that the mountings (6, . . ., 10) are constructed in the form of fins.

4. Apparatus according to claim 3, characterized in that the distance between the fins in the direction of flow of the fluid is at most half as much as their height transversely thereto.

5. Apparatus according to claim 2, characterized in that the mountings (11) are disposed parallel to the reactor wall and form a gap (13) with it.

6. Apparatus according to one or more of claims 2 to 5, characterized in that the mountings (6, . . ., 12) are disposed in the manner of segments.

**Revendications**

1. Procédé pour réduire l'échange de chaleur, de quantité de mouvement et de matière à proximité immédiate de la paroi de réacteurs à lit fluidisé, caractérisé en ce que la résistance d'écoulement pour le fluide, guidé à travers le lit fluidisé, à proximité de la paroi est accrue au point que le lit fluidisé n'est plus tourbillonnaire dans cette zone.

2. Dispositif pour la mise en œuvre du procédé selon la revendication 1, caractérisé par des inserts (6, . . ., 12) faisant saillie sur les parois intérieures du réacteur.

3. Dispositif selon la revendication 2, caractérisé en ce que les inserts (6, . . ., 10) sont réalisés sous la forme de nervures.

4. Dispositif suivant la revendication 3, caractérisé en ce que la distance des nervures suivant la direction d'écoulement du fluide est égale au maximum à la moitié de leur hauteur comptée transversalement par rapport à cette direction.

5. Dispositif selon la revendication 2, caractérisé en ce que les inserts (11) sont disposés parallèlement à la paroi du réacteur et forment une fente (13) avec cette dernière.

6. Dispositif selon une ou plusieurs des revendications 2 à 5, caractérisé en ce que les inserts (6, . . ., 12) sont disposés à la manière de segments.